# EUROPÄISCHE PATENTANMELDUNG

(11) **EP 2 365 478 A1**
(43) Veröffentlichungstag der Anmeldung: **14.09.2011**
(21) Anmeldenummer: 11002031.0
(22) Anmeldetag: 11.03.2011
(51) Int. Cl.: G09B 11/02, G09B 11/04, G09B 11/06, B43L 1/12, B43L 13/20

(54) **Schreib- und Mal-Lernhilfe sowie Schreibgerät, insbesondere zur Anwendung in Verbindung mit dieser Lernhilfe**

(30) Priorität: 11.03.2010 DE 102010011036
(71) Anmelder: Altmann, Banü, 78098 Triberg im Schwarzwald (DE)
(72) Erfinder: Altmann, Banü, 78098 Triberg im Schwarzwald (DE)
(74) Vertreter: Maucher, Wolfgang

(57) **Zusammenfassung**

Die Erfindung betrifft u.a. eine Lernhilfe, insbesondere eine Schreib- und/oder Mal-Lernhilfe, mit zumindest einem Materialbogen, der wenigstens eine Ausformung zum Fühlen und/oder eine Ausnehmung zum Nachfahren hat, welche Ausformung und/oder Ausnehmung in Form eines Buchstabens, einer Zahl oder eines Musters ausgebildet ist. Für die erfindungsgemäße Lernhilfe ist kennzeichnend, dass der wenigstens eine, auf dem Materialbogen vorgesehene Buchstabe, die mindestens eine Zahl und/oder das wenigstens eine Muster als eine flachseitig über den Materialbogen fühlbar vorstehende Ausformung ausgebildet ist, die eine, mit einem Schreibgerät nachfahrbare rillenförmige Ausnehmung begrenzt. Dabei kann der Materialbogen aus jedem geeigneten Material bestehen und über Pappe und Kunststoff hinaus beispielsweise auch aus Holz oder Metall hergestellt werden. Mit Hilfe der erfindungsgemäßen Lernhilfe kann Personen in mehreren Lernschritten das Schreiben oder Malen von Buchstaben, Zahlen und sonstigen Lernmotiven vermittelt werden, ohne dass eine demotivierende Anzahl von Fehlversuchen befürchtet werden müsste. Die erfindungsgemäße Lernhilfe ist für alle Personen geeignet, die ihre feinmotorischen Fähigkeiten nicht nur im Schreiben oder Malen, sondern auch in einer zielgerichteten sicheren Führung eines Gegenstandes von Standpunkt A nach Standpunkt B verbessern wollen.

## Beschreibung

Die Erfindung betrifft eine Lernhilfe, insbesondere eine Schreib- und/oder Mal-Lernhilfe, mit zumindest einem Materialbogen, der wenigstens eine Ausformung zum Fühlen und/oder eine Ausnehmung zum Nachfahren hat, welche Ausformung und/oder Ausnehmung in Form eines Buchstabens, einer Zahl oder eines Musters ausgebildet ist. Die Erfindung befasst sich auch mit einem Schreibgerät, dass eine im Schreibgerät verschieblich geführte Schreibspitze aufweist. Schließlich geht die Erfindung auch von einem Schreibgerät aus, dass zumindest im Griffbereich einen unrunden Querschnitt hat.

Bei Vorschulkindern ist häufig zu beobachten, dass diese aufgrund ihrer noch ungenügend trainierten feinmotorischen Fähigkeiten an ihren ersten Schreibversuchen verzweifeln. Den Kindern fällt es auch regelmäßig schwer, den Stift kontrolliert entlang einer geraden Linie oder einer Kurve zu führen; meist zittern sie oder "eiern" herum. Bereits die ersten Schreibversuche können daher zu einer Demotivation der Kinder bis hin zur Aufgabe aller weiteren Anstrengungen führen.

Man hat daher auch Kunststoffschablonen geschaffen, die Ausstanzungen in Buchstaben- oder Zahlenform tragen. Diese vorbekannten Kunststoffschablonen ermöglichen es dem Anwender, den Buchstaben oder Zahlen entlang der Ausstanzungsränder nachzufahren. Da jedoch der zur Herstellung solcher Kunststoffschablonen verwendete Materialbogen eine vergleichsweise geringe Dicke hat und da die Ausstanzungsränder eine dementsprechend geringe Höhe und Ausprägung aufweisen, neigt der ungeübte Anwender stets dazu, mit dem Schreibgerät über den Ausstanzungsrand hinaus auszubrechen und sich in unkontrollierten Schreibbewegungen zu verlieren.

Auch hat man bereits verschiedene Pappbilderbücher geschaffen, in denen die Lernmotive mit einem speziell strukturierten Farblack zum Fühlen und Nachfahren aufgedruckt sind. Diese Pappbilderbücher können insbesondere Kleinkinder gut motivieren und ihnen ein erstes Gefühl für die jeweiligen Buchstaben, Zahlen und sonstigen Lernmotive zu geben, - das zunehmend selbständige Schreiben und Zeichnen dieser Lernmotive wird den Kindern jedoch dann nicht weiter nähergebracht.

Es besteht daher insbesondere die Aufgabe, Hilfsmittel der eingangs erwähnten Art zu schaffen, die dem Anwender das sichere und selbständige Schreiben und Malen ohne größere demotivierende Misserfolge erleichtern.

Die erfindungsgemäße Lösung dieser Aufgabe besteht bei der Lernhilfe der eingangs erwähnten Art insbesondere darin, dass der wenigstens eine, auf dem Materialbogen vorgesehene Buchstaben, die mindestens eine Zahl und/oder das wenigstens eine Muster als eine flachseitig über den Materialbogen fühlbar vorstehende Ausformung ausgebildet ist, die eine, mit einem Schreibgerät nachfahrbare rillenförmige Ausnehmung begrenzt. Die erfindungsgemäße Lernhilfe umfasst zumindest einen Materialbogen, der wenigstens eine als Zahl, Buchstabe oder sonstiges Lernmotiv ausgebildete und flachseitig über den Materialbogen fühlbar vorstehende Ausformung hat, die eine, mit einem Schreibgerät nachfahrbare rillenförmige Ausnehmung begrenzt. Kleinkinder, die meist drei bis vier Jahre alt sein werden, oder auch andere Anwender können somit in einer ersten Lernphase die als flachseitig fühlbar vorstehende Ausformungen ausgebildeten Buchstaben, Zahlen oder dergleichen Lernmotive mit der Hand oder mit den Fingerspitzen nachfahren, so dass den Anwendern in dieser Lernphase ein erstes Gefühl für das betreffende Lernmotiv vermittelt wird. In einer zweiten Lernphase, in der beispielsweise Kinder meist etwa fünf bis sechs Jahre alt sein werden, wird den Anwendern ein Blei- oder Malstift, ein Filzschreiber oder ein sonstiges, gegebenenfalls auch spezielles Schreibgerät zur Verfügung gestellt, mit dem die Anwender die ihnen bereits vom Erfühlen geläufigen Lernmotive entlang der die Lernmotive wiedergebenden rillenförmigen Ausnehmungen nachfahren oder nachziehen können. In einer dritten Lernphase schließlich werden die Kinder oder sonstige Anwender angeregt, die Lernmotive innerhalb der durch die betreffende Ausnehmung umrissenen Grenzen oder Ränder frei zu schreiben, bevor die Anwender diese Lernmotive auch ohne jede weitere Schreib- oder Malhilfe sicher und frei schreiben können.

Die Erfindung ist nicht auf eine Anwendbarkeit durch Kinder beschränkt, vielmehr kann die erfindungsgemäße Schreibund/oder Mal-Lernhilfe auch vorteilhaft eingesetzt werden, wenn erwachsene Personen, beispielsweise Schlaganfallpatienten, eine vergleichbare Unterstützung beim Malen oder Schreiben benötigen. Die erfindungsgemäße Schreib- und/oder Mal-Lernhilfe ist als Lernhilfe für alle Personen geeignet, die ihre feinmotorischen Fähigkeiten nicht nur im Schreiben oder Malen, sondern auch in einer zielgerichteten sicheren Führung eines Gegenstandes von Standpunkt A nach Standpunkt B verbessern möchten. So ist die erfindungsgemäße Lernhilfe beispielsweise auch für Grafiker, Designer, Künstler usw. geeignet.

Nach einem weiteren Vorschlag, der ebenfalls zur Lösung der oben gestellten Aufgabe dient, ist bei einer Schreib-und/oder Mal-Lernhilfe der eingangs erwähnten Art vorgesehen, dass die Ausnehmung als eine, vorzugsweise bis auf wenigstens eine Durchgriffsöffnung geschlossene Führungsbahn ausgebildet ist, in welcher das Schreibgerät unverlierbar geführt ist. Bei einer solchen Schreib- und/oder Mal-Lernhilfe, bei der die Ausnehmung als geschlossene Führungsbahn ausgestaltet ist, wird der Anwender beim Schreiben sicher entlang dem vorgegebenen Buchstaben, der Zahl oder dem Muster geführt. Dabei ist dem Anwender auch eine schreibgerechte Schrägstellung des Schreibgerätes während des Schreibens oder des Malens möglich, ohne dass ein Ausreißen der Schreibspitze aus der als Führungsbahn dienenden Ausnehmung zu befürchten ist.

Aus der DE 713 991 B ist bereits eine als Lernhilfe dienende Übungstafel für den Schreib- und Zeichenunterricht bekannt, in die Nuten in Gestalt von Buchstaben, Figuren oder Zeichen eingearbeitet sind, wobei die Nuten an den Kreuzungsstellen der Linien so gestaltet sind, dass der Schreibstift nicht in eine falsche Richtung weiterbewegt werden kann. Dazu ist an den Kreuzungsstellen eine nur für den einen Linienzug bestimmte Nut vorgesehen, die zur Führung des an den Nutenquerschnitt angepassten Schreibstiftendes dient, während für den anderen kreuzenden Linienzug dagegen ein den Schreibstift oberhalb seines Endes an einer Einschnürung umfassender Schlitz vorgesehen ist, der sich im Abstand von der Unterlage der vorbekannten Übungstafel befindet. Die aus DE 713 991 B vorbekannte Übungstafel sieht somit nur im Bereich der Kreuzungsstellen eine Zwangsführung des Schreibgerätes vor, während dem Anwender über diese Kreuzungsstellen hinaus keine ausreichende Schreibführung angeboten wird. Die Schreibbewegungen müssen jedoch trainiert und im Gehirn abgespeichert werden, weil nämlich das Auge den schnellen Schreibbewegungen nicht mehr folgen kann. Die aus DE 713 991 B vorbekannte Übungstafel vermag daher nicht dem Anwender das Antrainieren von Buchstaben, Figuren oder Zeichnungen über deren gesamte Wegstrecke hin zu erleichtern.

Eine bevorzugte Ausführungsform gemäß der Erfindung sieht vor, dass das Schreibgerät vorzugsweise oberhalb seiner Schreibspitze zumindest einseitig, vorzugsweise beidseitig eine Kerbe, eine Nut, eine Rille oder dergleichen Einformung hat, in die der vorspringende Rand der Ausnehmung im Bereich ihrer Rillenöffnung eingreift. Da der vorspringende Rand der Ausnehmung in die vorzugsweise an der Schreibspitze des Schreibgerätes vorgesehene Nut, Rille oder dergleichen Einformung eingreift, ist das Schreibgerät in der als Führungsbahn ausgebildeten Ausnehmung zwar verschieblich, aber dennoch unverlierbar geführt.

Es ist ein besonderer Vorteil der erfindungsgemäßen Schreib-und/oder Mal-Lernhilfe, dass die wenigstens eine fühlbar vorstehende Ausformung und/oder die zumindest eine rillenförmige Ausnehmung unterbrechungsfrei einen Buchstaben, eine Zahl und/oder ein Muster nachbilden. Da die Ausformung und/oder die Ausnehmung unterbrechungsfrei ein Muster nachbilden, wird dem Anwender stets eine sichere und flüssige Schreib- oder Malweise vorgegeben.

Eine Ausführung gemäß der Erfindung sieht vor, dass die einen Buchstaben, eine Zahl oder ein Lernmotiv vorgebende rillenförmige Ausnehmung geschlossen ausgestaltet ist und einen Rillengrund hat, der die Spitze der Schreibhilfe oder des Schreibgerätes zu führen vermag.

Demgegenüber besteht eine bevorzugte Ausführungsform darin, dass die rillenförmige Ausnehmung beidseits flachseitig offen ausgestaltet ist und dass die rillenförmige Ausnehmung mittels der Spitze einer Schreibhilfe oder eines Schreibgerätes bis zu einer unterhalb des Materialbogens befindlichen Unterlage derart durchsetzbar ist, dass diese Schreibversuche auf der Unterlage beispielsweise durch Tinte, Tusche oder Bleistiftabtrag ersichtlich und nachvollziehbar sind.

Vorteilhaft ist es, wenn die rillenförmige Ausnehmung wenigstens bereichsweise einen sich zur sichtseitigen Flachseite des Materialbogens hin konisch erweiterten lichten Rillenquerschnitt hat. Weist die rillenförmige Ausnehmung wenigstens bereichsweise einen sich konisch erweiternden lichten Rillenquerschnitt auf, kann eine Schreibhilfe oder ein Schreibgerät mit der üblichen Schreibhaltung der Hand in der Ausnehmung geführt werden.

Die Tinte, Tusche oder der Bleistiftabtrag lässt sich besonders bequem durch die erfindungsgemäße Schreib- oder Malhilfe hindurch auf die Unterlage aufbringen, wenn die rillenförmige Ausnehmung zwei, sich vorzugsweise in der Mitte des Materialbogens treffende Rillen-Teilbereiche hat, die jeweils einen, sich zur benachbarten Flachseite des Materialbogens hin konisch erweiternden lichten Rillenquerschnitt aufweisen.

Die erfindungsgemäße Schreib- und/oder Mal-Lernhilfe kann auch als elektronisches Lehrmittel ausgebildet sein. Dabei sieht beispielsweise eine Ausführungsform gemäß der Erfindung vor, dass der Materialbogen eine Aluminiumfolie oder dergleichen stromleitende Metallschicht ist oder aufweist, die zur Ergebniskontrolle mit einem als elektronisches Messgerät und insbesondere als Druckmessgerät ausgebildeten Schreibgerät zusammenwirkt.

Der mit der Herstellung der erfindungsgemäßen Schreib-und/oder Mal-Lernhilfe verbundene Aufwand lässt sich jedoch erheblich reduzieren, wenn der Materialbogen aus einer vorzugsweise mindestens 3 mm dicken Pappe hergestellt ist.

Die erfindungsgemäße Schreib- und/oder Mal-Lernhilfe kann über die Zeit aber auch von mehreren Kindern verwendet und bespielt werden, wenn der Materialbogen aus einem reißfesten und/oder abwaschbaren Kunststoff hergestellt ist. Solches Kunststoffmaterial bietet auch den Vorteil, dass der Materialbogen mit einem geringen Gewicht ausgestaltet werden kann, was den Transport des Materialbogens wesentlich erleichtert. Grundsätzlich kann die erfindungsgemäße Lernhilfe aus jedem geeigneten Material hergestellt sein; so sind Ausführungen denkbar, die über Pappe und Kunststoff hinaus beispielsweise aus Holz und/oder Metall hergestellt sind.

Eine bevorzugte Weiterbildung gemäß der Erfindung sieht vor, dass der Materialbogen vorzugsweise auf seiner Sichtseite eine das Einsetzen und das Entfernen eines Schreibgerätes oder einer Schreibhilfe markierende und/oder die beim Nachziehen der Zahl, des Buchstabens oder des Musters festgelegte Linienführung kennzeichnende Bedruckung oder dergleichen Markierung trägt. Auf dem Materialbogen der erfindungsgemäßen Schreib- oder Mal-Lernhilfe ist eine, die Zahl, den Buchstaben oder das Lernmotiv festlegende Bedruckung oder dergleichen Markierung vorgesehen, die dem Anwender die zum Schreiben oder Zeichnen eines Lernmotivs erforderliche Linienführung vorgibt. Diese, die Linienführung kennzeichnende Bedruckung vereinfacht dem Anwender die Handhabung der erfindungsgemäßen Schreib- und/oder Mal-Lernhilfe.

Bei Schreib-Anfängern besteht häufig das Problem, dass diese ihre Schreibversuche mit überstarkem Druck durchführen und dass auch deshalb diese Schreibversuche erschwert sind. Eine besonders vorteilhafte Ausführungsform gemäß der Erfindung sieht daher vor, dass der Schreib- oder Mal-Lernhilfe ein Schreibgerät zugeordnet ist, das mit Hilfe eines Signalgebers den als bevorzugt festgelegten Anpressdruck signalisiert. Ein solcher Signalgeber kann dem Anwender signalisieren, wenn der auf das Schreibgerät ausgeübte Anpressdruck ein als ausreichend festgelegtes Maß übersteigt. Wird das Schreibgerät mit seiner Schreibspitze in einer geschlossenen Führungsbahn bewegt, lässt sich gegebenenfalls auch die auf die Schreibspitze ausgeübte Zugkraft messen.

Bei dem eingangs erwähnten Schreibgerät besteht eine erfindungsgemäße Lösung der oben gestellten Aufgabe darin, dass die Schreibspitze im Schreibgerät in Schreibstellung gegen eine Rückstellkraft verschieblich geführt ist und dass der durch Druckbeaufschlagung der Schreibspitze bewirkte und als Maß für den beim Schreiben auf die Schreibspitze ausgeübten Anpressdruck herangezogene Schiebeweg mit Hilfe einer als Signalgeber dienenden Wegstreckenanzeige messbar oder zuordenbar ist.

Aus der DE 10 2008 037 487 A1 kennt man bereits ein Schreibgerät, dass zur Messung von axialen oder radialen Drücken einen Drucksensor oder einen Beschleunigungssensor aufweist, wobei das vorbekannte Schreibgerät mit einer Datenverarbeitungseinheit verbunden ist, die zum Vergleich der mittels des mindestens einen Drucksensors oder Beschleunigungssensors erfassten Daten mit vorher festgelegten Referenzdaten dient. Die Datenverarbeitungseinheit steht mit einer Vorrichtung in Signalverbindung, die ein haptisch spürbares oder auch akustisch wahrnehmbares Signal abgeben kann. Das vorbekannte Schreibgerät erlaubt es, bei der Behandlung neuromotorischer Schreibstörungen auch ohne die direkte Mitwirkung oder die Anwesenheit eines Therapeuten die erforderlichen Therapieschritte durchzuführen. Da der Nutzer bei der Durchführung von Übungen eine unmittelbare haptisch spürbare oder akustisch wahrnehmbare Rückmeldung über Fehler beim Aufdrücken des Schreibgerätes, bei der Stifthaltung oder bei ruckartiger Bewegung des Schreibgerätes erhält, kann der Nutzer eine unmittelbare Korrektur dieses Fehlers vornehmen, in dem er Druck, Stifthaltung oder Stiftführung dergestalt variiert, dass die haptisch spürbare oder akustisch wahrnehmbare Rückmeldung verschwindet. Das vorbekannte Schreibgerät ist jedoch mit einem erheblichen Aufwand verbunden.

Demgegenüber ist die Schreibspitze bei dem erfindungsgemäßen Schreibgerät, das in Verbindung mit der oben beschriebenen Lernhilfe oder auch ohne diese vorteilhaft eingesetzt werden kann, gegen eine Rückstellkraft derart verschieblich geführt, dass der durch Druckbeaufschlagung der Schreibspitze bewirkte Schiebeweg als Maß für den beim Schreiben auf die Schreibspitze ausgeübten Anpressdruck messbar und zuordenbar ist. Dieser Schiebeweg wird mit Hilfe einer als Signalgeber dienenden Wegstreckenanzeige gemessen und vorzugsweise visuell angezeigt. Dabei ist das erfindungsgemäße Schreibgerät auch ohne größeren Aufwand in Konstruktion und Herstellung auf rein mechanische Weise kostengünstig zu realisieren.

Damit auch der ungeübte und/oder kindliche Anwender die an dem erfindungsgemäß vorgesehenen Schreibgerät befindliche Wegstreckenanzeige gut erfassen und beurteilen kann, ist es zweckmäßig, wenn die Wegstreckenanzeige zumindest zwei Anzeigemodi hat, von denen wenigstens ein Anzeigemodus einen überhöhten Anpressdruck beim Schreiben anzeigt, und ein, einem demgegenüber kürzeren Schiebeweg entsprechender, vorzugsweise farblich abgesetzter Anzeigemodus einen ausreichenden Anpressdruck beim Schreiben signalisiert.

Bei dem Schreibgerät der eingangs erwähnten Art besteht ein weiterer Vorschlag gemäß der Erfindung darin, dass das Schreibgerät zumindest in seinem Griffbereich zwei auf gegenüberliegenden Seiten angeordnete und in Längsrichtung des Schreibgerätes orientierte Einschnürungen zur Ablage des Zeige- oder Mittelfingers einerseits und des Daumens andererseits aufweist.

Die an dem erfindungsgemäßen Schreibgerät zumindest im Griffbereich vorgesehenen und in Längsrichtung des Schreibgerätes orientierten Einschnürungen erlauben es auch dem ungeübten Anwender, das erfindungsgemäße Schreibgerät derart sicher und fest in die Hand zu nehmen, dass ihm das sichere und selbständige Schreiben und Malen ohne größere demotivierende Misserfolge erleichtert wird.

Einem ungewollten Abrutschen der das Schreibgerät umschlie-βenden Finger des Anwenders wird entgegengewirkt, wenn eine von den Einschnürungen begrenzte Außenseite des Schreibgerätes zumindest im Griffbereich als vorzugsweise abgeflachte Querschnittsverbreiterung ausgebildet ist.

Zusätzlich oder stattdessen kann es vorteilhaft sein, wenn das Schreibgerät zumindest in seinem Griffbereich einen etwa 8-förmigen oder pilzförmigen Querschnitt hat.

Weitere Ausführungsformen gemäß der Erfindung ergeben sich aus den Ansprüchen sowie der Zeichnung. Nachstehend wird die Erfindung anhand bevorzugter Ausführungsbeispiele noch näher beschrieben.

Es zeigt:
- Fig. 1: eine aus einem Materialbogen hergestellte SchreibLernhilfe, die flachseitig über den Materialbogen fühlbar vorstehende und als Buchstabe oder Zahl ausgebildete Ausformungen aufweist, wobei diese Ausformungen jeweils eine, mit einem Schreibgerät nachfahrbare, rillenförmige Ausnehmung begrenzen,
- Fig. 2: die Schreib-Lernhilfe aus Fig. 1 in einer Detaildarstellung im Bereich einzelner Buchstaben und Zahlen, wobei eine die Linienführung des Schreibgerätes vorgebende und seitlich von der Ausführung angeordnete Bedruckung erkennbar ist,
- Fig. 3: die Schreib-Lernhilfe in einem Detail-Querschnitt durch eine rillenförmige und zur Unterlage hin geschlossene Ausnehmung, wobei die rillenförmige Ausnehmung in verschiedenen Ausführungsbeispielen dargestellt ist (vgl. Fig. 3a und 3b),
- Fig. 4: die Schreib-Lernhilfe in einem Detail-Querschnitt durch eine rillenförmige und zur Unterlage hin offene Ausnehmung, wobei die rillenförmige Ausnehmung in verschiedenen Ausführungsbeispielen (vgl. Fig. 4a bis 4h) dargestellt ist,
- Fig. 5: die Schreib-Lernhilfe in einem schematisierten Detail-Querschnitt durch eine als Buchstabe, als Zahl oder dergleichen Lernmotiv ausgebildete Ausformung, wobei die über den Materialbogen flachseitig fühl-
- Fig. 6: bar vorstehende Ausformung in verschiedenen Ausführungsbeispielen (vgl. Fig. 5a bis 5d) dargestellt ist, die Schreib-Lernhilfe in einem Detail-Querschnitt durch die, eine rillenförmige Ausnehmung umgrenzenden und als Buchstabe, Zahl oder dergleichen Lernmotiv ausgebildete Ausnehmung,
- Fig. 7a bis 7 d: eine Schreib-Lernhilfe in einem Detail-Querschnitt durch eine als geschlossene Führungsbahn ausgebildete rillenförmige Ausnehmung, in der die Schreibspitze eines in Fig. 7 nicht weiter dargestellten Schreibgerätes unverlierbar geführt ist,
- Fig. 8a bis 8d: ein Schreibgerät im Bereich seiner Schreibspitze, die zu den als Führungsbahn ausgebildeten Ausnehmungen gemäß den Fig. 7a bis 7d komplementär ausgestaltet sind,
- Fig. 9: ein der Schreib- und/oder Mal-Lernhilfe gemäß den Fig. 1 bis 8 zugeordnetes Schreibgerät, in dem eine Schreibmine oder Schreibspitze verschieblich geführt ist, wobei das Schreibgerät hier in einer "durchleuchteten Darstellung" gezeigt ist,
- Fig. 10: ein mit Fig. 9 vergleichbar ausgestaltetes Schreibgerät in einer Außenansicht,
- Fig. 11: das Schreibgerät aus den Fig. 9 oder 10 in einer Querschnittsdarstellung, und
- Fig. 12: die Schreibspitze eines mit den Fig. 9 und 10 vergleichbaren Schreibgerätes, wobei daran eine umlaufende Kerbe oder Rille vorgesehen ist, in die der vorspringende Rand der Ausnehmung im Bereich ihrer Rillenöffnung eingreift.

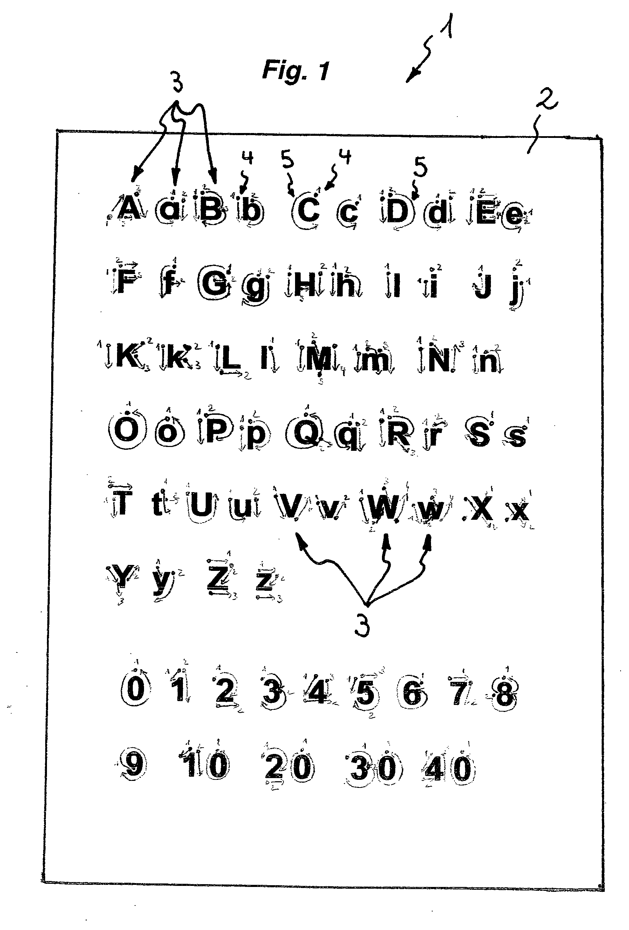

In Figur 1 ist eine Schreib-Lernhilfe 1 dargestellt, die das Schreibenlernen von Buchstaben und Zahlen erleichtern soll. Die Schreib-Lernhilfe 1 besteht aus einem Materialbogen 2, der für jeden Buchstaben und für jede Zahl eine Ausformung zum Fühlen des betreffenden Lernmotivs oder Lernmusters hat.

Die auf dem Materialbogen 1 vorgesehenen Buchstaben und Zahlen sind jeweils als eine, auf dem Materialbogen flachseitig vorstehende Ausformung 3 ausgebildet, die eine mit einem Schreibgerät nachfahrbare, in Fig. 1 nicht weiter dargestellte rillenförmige Ausnehmung begrenzt. Das Schreibgerät kann als Blei- beziehungsweise Malstift oder als Filz- beziehungsweise Kugelschreiber ausgebildet sein oder lediglich eine in die rillenförmige Ausnehmung eingreifende Schreibspitze haben.

Kleinkinder, die meist etwa drei bis vier Jahre alt sein werden, können in einer ersten Lernphase die als flachseitig fühlbar vorstehende Ausformungen 3 ausgebildeten Buchstaben, Zahlen oder dergleichen Lernmotive mit der Hand oder mit den Fingerspitzen nachfahren, so dass den Kindern in dieser Lernphase ein erstes Gefühl für das betreffende Lernmotiv oder Lernmuster vermittelt wird.

In einer zweiten Lernphase wird den Kindern der Blei- beziehungsweise Malstift oder der Filz- beziehungsweise Kugelschreiber oder ein sonstiges Schreibgerät zur Verfügung gestellt, mit dem die Kinder die ihnen bereits vom Erfühlen geläufigen Lernmotive und Lernmuster entlang der die Lernmotive wiedergebenden rillenförmigen Ausnehmungen nachfahren oder nachziehen können.

In einer dritten Lernphase werden die Kinder angeregt, die Lernmotive innerhalb der durch die betreffende Ausnehmung umrissenen Grenzen oder Ränder frei zu schreiben, bevor die Kinder diese Lernmotive anschließend auch ohne jede weitere Schreib- oder Mal-Lernhilfe sicher und frei schreiben können.

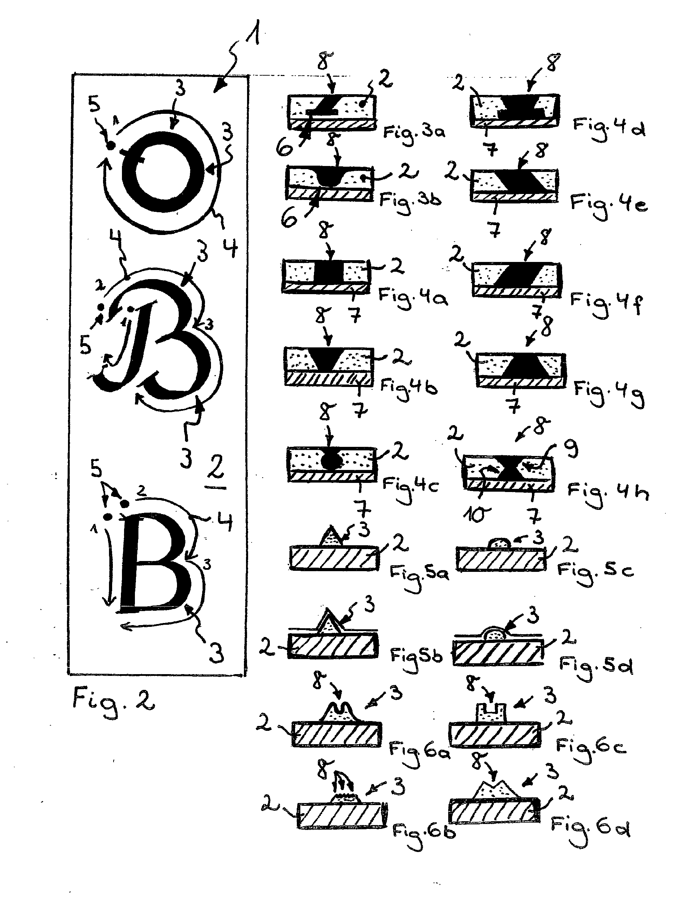

Wie aus den Fig. 3a und 3b erkennbar ist, kann die jeweils in Form eines Buchstabens oder einer Zahl ausgebildete und von der Ausformung umgrenzte rillenförmige Ausnehmung geschlossen ausgestaltet sein und dazu einen, die Spitze des Schreibgerätes führenden Rillengrund 6 aufweisen. Möglich ist aber auch, dass die rillenförmige Ausnehmung beidseits flachseitig offen ausgestaltet ist und dass die rillenförmige Ausnehmung 8 mittels der Spitze des Schreibgerätes bis zu einer unterhalb des Materialbogens befindlichen und vom Materialbogen getrennte Unterlage 7 durchsetzbar ist. Ausführungsbeispiele einer solchen, beidseits flachseitig offenen rillenförmigen Ausnehmung 8 sind in den Fig. 4a bis 4h gezeigt. Ist die rillenförmige Ausnehmung 8 zur Unterlage 7 hin offen ausgestaltet, lassen sich die mit Hilfe der Schreib-Lernhilfe 1 durchgeführten Schreibversuche durch die auf die Unterlage 7 übertragenen Schreiblinien dokumentieren und betrachten.

Um dem Anwender während der Schreibversuche mit Hilfe der Schreib-Lernhilfe 1 eine bequeme und übliche Schreibhaltung der Hand zu ermöglichen, ist es vorteilhaft, wenn die rillenförmige Ausnehmung 2 sich vorzugsweise in der Mitte des Materialbogens treffende Rillen-Teilbereiche 9,10 hat, die jeweils einen sich zur benachbarten Flachseite des Materialbogens hin konisch erweiternden lichten Rillenquerschnitt aufweisen. Ein solches bevorzugtes Ausführungsbeispiel ist in Fig. 4h ersichtlich.

Aus einem Vergleich der Fig. 1 und 2 wird deutlich, dass der Materialbogen 2 auf seiner hier dargestellten Sichtseite eine das Einsetzen und das Entfernen eines Schreibgerätes oder einer Schreibhilfe markierende und/oder die beim Nachziehen der Zahl, des Buchstabens oder des Musters festgelegte Linienführung kennzeichnende Bedruckung oder dergleichen Markierung 4, 5 trägt. Dabei geben die punktförmigen Markierungen 3 das Einsetzen oder Entfernen der Schreibspitze des Schreibgerätes vor. Die linienförmigen Markierungen 4 zeigen dem Anwender, in welche Richtung das Schreibgerät bewegt werden soll, um das betreffende Lernmotiv nachzuschreiben oder nachzuzeichnen. Dabei zeigen die an den linienförmigen Markierungen 4 vorgesehenen Pfeile, in welche Richtung das Schreibgerät bewegt werden soll. Wird der Buchstabe, die Zahl oder dergleichen Lernmotiv durch mehrere Linien geschrieben oder gezeichnet, geben die an den linienförmigen Markierungen 4 vorgesehenen Nummerierungen die Reihenfolge der erforderlichen Schreiblinien vor.

Damit der Anwender seine ersten Schreibversuche nicht mit einem überstarken Anpressdruck auf das Schreibgerät ausübt, kann es vorteilhaft sein, wenn der Schreib- oder Mal-Lernhilfe 1 ein Schreibgerät zugeordnet ist, das mit Hilfe eines Signalgebers den als ausreichend und bevorzugt festgelegten Anpressdruck signalisiert.

Der zur Herstellung der Schreib-Lernhilfe 1 erforderliche Aufwand kann vergleichsweise gering gehalten werden, wenn der Materialbogen 2 aus einer beispielsweise mindestens 3 mm dicken Pappe hergestellt ist. Um die hier dargestellte Schreib-Lernhilfe über die Zeit auch mehreren Anwendern zur Verfügung stellen zu können und um ein unbeabsichtigtes Einreißen und Aufweichen der aus dem Materialbogen 2 hergestellten Schreib-Lernhilfe 1 zu vermeiden, wird eine Ausführung bevorzugt, bei welcher der Materialbogen 2 aus einem reißfesten und/oder abwaschbaren Kunststoff hergestellt ist. Ist der Materialbogen 2 aus einem abwaschbaren Kunststoff hergestellt, lässt sich die Schreib-Lernhilfe bei Bedarf auch abwaschen, um die auf dem Materialbogen 2 zurückgebliebenen Linien des Bleistiftes, Filzschreibers oder dergleichen Schreibgerätes zu entfernen, bevor die Schreib-Lernhilfe 1 erneut für weitere Schreibversuche zur Verfügung steht.

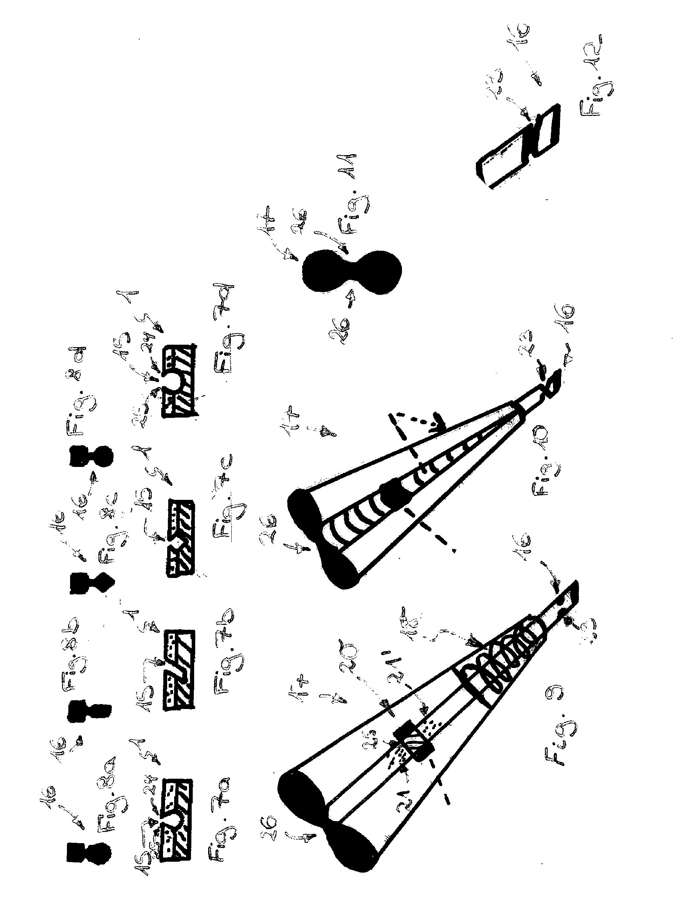

In den Fig. 7a bis 7d ist eine Schreib- und/oder Mal-Lernhilfe 1 in einem Detail-Querschnitt durch eine rillenförmige Ausnehmung dargestellt. Diese rillenförmige Ausnehmung ist hier als geschlossene Führungsbahn 15 ausgebildet, in der die Schreibspitze eines Schreibgerätes unverlierbar geführt ist. Die als geschlossene Führungsbahn 15 ausgebildete Ausnehmung weist lediglich zumindest eine Durchgriffsöffnung auf, die zum Einführen oder Entnehmen der Schreibspitze in die oder aus der Führungsbahn dient. Ist die Ausnehmung derart als geschlossene Führungsbahn 15 ausgestaltet, wird der Anwender beim Schreiben oder Malen sicher entlang den vorgegebenen Buchstaben, der Zahl oder dem Muster geführt.

In den Fig. 8a bis 8d ist ein Schreibgerät im Bereich seiner Schreibspitze 16 dargestellt, welche Schreibspitze 16 jeweils an eine der in den Fig. 7a bis 7d gezeigten Ausnehmungen formangepasst ist. Aus einem Vergleich der Fig. 7a bis 7d einerseits und der Fig. 8a bis 8d andererseits wird deutlich, dass eine dem Führungsquerschnitt der Führungsbahn 15 formangepasste Schreibspitze 16 des Schreibgerätes in der als Führungsbahn 15 ausgebildeten Ausnehmung sicher und unverlierbar geführt ist.

In den Fig. 9 und 10 ist ein Schreibgerät 17 dargestellt, das den Schreib- und/oder Mal-Lernhilfen 1 gemäß den Fig. 1 bis 8 zugeordnet ist. In der "durchleuchteten Darstellung" in Fig. 9 wird deutlich, dass die Schreibspitze 16 des Schreibgerätes 17 darin gegen eine als Rückstellkraft dienende Rückstellfeder 18 verschieblich geführt ist. Der durch Druckbeaufschlagung der Schreibspitze 16 bewirkte Schiebeweg wird als Maß für den beim Schreiben auf die Schreibspitze 16 ausgeübten Anpressdruck herangezogen. Dazu wird der durch Druckbeaufschlagung der Schreibspitze 16 bewirkte Schiebeweg mit Hilfe einer als Signalgeber dienenden Wegstreckenanzeige 19 messbar oder zuordenbar gemacht. In der "durchleuchteten Darstellung" in Fig. 9 ist erkennbar, dass an der im Schreibgerät 17 verschieblich geführten Schreibmine oder Schreibspitze 16 ein beispielsweise grün ausgeführter Anzeigemodus 25 umfangsseitig aufgebracht ist, der durch ein Anzeigefenster 20 im Gehäuse des Schreibgerätes 17 erkennbar ist. Beidseits des einen ausreichenden Anpressdruck anzeigenden Anzeigemodus 25 sind beispielsweise rot gehaltene Anzeigemodi 21, 21' vorgesehen, die entweder einen zum Schreiben zu geringen Anpressdruck anzeigen oder einen demgegenüber überhöhten Anpressdruck signalisieren. Aus einem Vergleich der Fig. 9 und 10 einerseits und der Fig. 12 andererseits ist erkennbar, dass die Schreibmine oder Schreibspitze 16 umfangsseitig eine umlaufende Kerbe oder Rille 23 hat, in die der vorspringende Rand 24, 25 (vgl. Fig. 7a, 7d) der Ausnehmung im Bereich ihrer Rillenöffnung eingreift.

Aus einem Vergleich der Fig. 10 und 11 wird deutlich, dass das Schreibgerät 17 einen im wesentlichen 8-förmigen Querschnitt hat. Durch die großzügig gerundeten Längsränder des Schreibgerätes 17 liegt dieses beim Schreiben oder Malen durch den Anwender sicher und bequem in der Hand. Dabei kann der Anwender in Schreibstellung seinen Zeige- oder Mittelfinger einerseits und seinen Daumen andererseits in die beidseits vorgesehene Einschnürung 26 des 8-förmigen Schreibgeräte-Querschnittes einlegen, so dass das Schreibgerät dem Anwender sicher und fest in der Hand liegt.

## Patentansprüche

1. Lernhilfe, insbesondere Schreib- und/oder Mal-Lernhilfe (1), mit zumindest einem Materialbogen (2), der wenigstens eine Ausformung (3) zum Fühlen und/oder eine Ausnehmung zum Nachfahren hat, welche Ausformung (3) und/oder Ausnehmung in Form eines Buchstabens, einer Zahl oder eines Musters ausgebildet ist, **dadurch gekennzeichnet, dass** der wenigstens eine, auf dem Materialbogen (2) vorgesehene Buchstabe, die mindestens eine Zahl und/oder das wenigstens eine Muster als eine flachseitig über den Materialbogen (2) fühlbar vorstehende Ausformung (3) ausgebildet ist, die eine, mit einem Schreibgerät nachfahrbare rillenförmige Ausnehmung (8) begrenzt.

2. Schreib- und/oder Mal-Lernhilfe nach dem Oberbegriff von Anspruch 1, insbesondere nach Anspruch 1, **dadurch gekennzeichnet, dass** die Ausnehmung als eine, vorzugsweise bis auf wenigstens eine Durchgriffsöffnung geschlossene Führungsbahn (15) ausgebildet ist, in welcher das Schreibgerät unverlierbar geführt ist.

3. Lernhilfe nach Anspruch 1 oder 2, **dadurch gekennzeichnet, dass** das Schreibgerät (17) vorzugsweise oberhalb seiner Schreibspitze zumindest einseitig, insbesondere beidseitig eine Kerbe, eine Nut, eine Rille oder dergleichen Einformung hat, in die der vorspringende Rand der Ausnehmung im Bereich ihrer Rillenöffnung eingreift.

4. Lernhilfe nach einem der Ansprüche 1 bis 3, **dadurch gekennzeichnet, dass** die wenigstens eine fühlbar vorstehende Ausformung und/oder die zumindest eine rillenförmige Ausnehmung unterbrechungsfrei einen Buchstaben, einen Zahl und/oder ein Muster nachbilden.

5. Lernhilfe nach einem der Ansprüche 1 bis 4, **dadurch gekennzeichnet, dass** die rillenförmige Ausnehmung (8) geschlossen ausgestaltet ist und dazu einen, eine Spitze des Schreibgerätes führenden Rillengrund (6) hat.

6. Lernhilfe nach einem der Ansprüche 1 bis 5, **dadurch gekennzeichnet, dass** die rillenförmige Ausnehmung (8) beidseits flachseitig offen ausgestaltet ist und dass die rillenförmige Ausnehmung (8) mittels der Spitze eines Schreibgerätes bis zu einer unterhalb des Materialbogens (2) befindlichen Unterlage (7) durchsetzbar ist.

7. Lernhilfe nach einem der Ansprüche 1 bis 6, **dadurch gekennzeichnet, dass** die rillenförmige Ausnehmung (8) wenigstens bereichsweise einen sich zur sichtseitigen Flachseite des Materialbogens (2) hin konisch erweiternden lichten Rillenquerschnitt hat.

8. Lernhilfe nach einem der Ansprüche 1 bis 7, **dadurch gekennzeichnet, dass** die rillenförmige Ausnehmung (8), sich vorzugsweise etwa in der Mitte des Materialbogens (2) treffende Rillen-Teilbereiche (9, 10) hat, die jeweils einen sich zur benachbarten Flachseite des Materialbogens (2) hin konisch erweiternden lichten Rillenquerschnitt aufweisen.

9. Lernhilfe nach einem der Ansprüche 1 bis 8, **dadurch gekennzeichnet, dass** der Materialbogen (2) aus einer vorzugsweise mindestens 3 mm dicken Pappe hergestellt ist.

10. Lernhilfe nach einem der Ansprüche 1 bis 9, **dadurch gekennzeichnet, dass** der Materialbogen (2) aus einem reißfesten und/oder abwaschbaren Kunststoff hergestellt ist.

11. Lernhilfe nach einem der Ansprüche 1 bis 10, **dadurch gekennzeichnet, dass** der Materialbogen (2) vorzugsweise auf seiner Sichtseite eine das Einsetzen und das Entfernen eines Schreibgerätes oder einer Schreibhilfe markierende und/oder die beim Nachziehen der Zahl, des Buchstabens oder des Musters festgelegte Linienführung kennzeichnende Bedruckung oder dergleichen Markierung (4, 5) trägt.

12. Lernhilfe nach einem der Ansprüche 1 bis 11, **dadurch gekennzeichnet, dass** der Lernhilfe ein Schreibgerät zugeordnet ist, das mit Hilfe eines Signalgebers den als bevorzugt festgelegten Anpressdruck signalisiert.

13. Schreibgerät mit einer im Schreibgerät verschieblich geführten Schreibspitze, insbesondere zur Anwendung des Schreibgerätes in Verbindung mit der Lernhilfe gemäß einem der Ansprüche 1 bis 12, **dadurch gekennzeichnet, dass** die Schreibspitze (16) des Schreibgerätes (17) darin in Schreibstellung gegen eine Rückstellkraft (18) verschieblich geführt ist und dass der durch Druckbeaufschlagung der Schreibspitze (16) bewirkte und als Maß für den beim Schreiben auf die Schreibspitze (16) ausgeübten Anpressdruck herangezogene Schiebeweg mit Hilfe einer als Signalgeber dienenden Wegstreckenanzeige (20) messbar oder zuordenbar ist.

14. Schreibgerät nach Anspruch 13, **dadurch gekennzeichnet, dass** die Wegstreckenanzeige (20) zumindest zwei Anzeigemodi hat, von denen wenigstens ein Anzeigemodus (21, 21') einen überhöhten Anpressdruck beim Schreiben anzeigt und ein, einem demgegenüber kürzeren Schiebeweg entsprechender, vorzugsweise farblich abgesetzter Anzeigemodus (25) einen ausreichenden Anpressdruck beim Schreiben signalisiert.

15. Schreibgerät, dass zumindest im Griffbereich einen unrunden Querschnitt hat, insbesondere nach Anspruch 13 oder 14, **dadurch gekennzeichnet, dass** das Schreibgerät zumindest in seinem Griffbereich zwei auf gegenüberliegenden Seiten angeordnete und in Längsrichtung orientierte Einschnürungen zur Ablage des Zeige- oder Mittelfingers einerseits und des Daumens andererseits aufweist.

16. Schreibgerät nach Anspruch 15, **dadurch gekennzeichnet, dass** eine von den Einschnürungen begrenzte Außenseite des Schreibgerätes zumindest im Griffbereich als vorzugsweise abgeflachte Querschnittsverbreiterung ausgebildet ist.

17. Schreibgerät nach Anspruch 15 oder 16, **dadurch gekennzeichnet, dass** das Schreibgerät zumindest in seinem Griffbereich einen etwa 8-förmigen oder pilzförmigen Querschnitt hat.
